# EUROPEAN PATENT APPLICATION

(11) **EP 2 309 654 A2**
(43) Date of publication of application: **13.04.2011**
(21) Application number: 09803150.3
(22) Date of filing: 29.07.2009
(51) Int. Cl.: H04B 1/38, H04B 1/03, H04B 1/08, H01Q 3/00

(54) **DEVICE AND METHOD FOR CONTROLLING WIRELESS IMAGE DISPLAY DEVICE**

(30) Priority: 29.07.2008 KR 20080073945
(71) Applicant: LG Electronics Inc., Seoul 150-721 (KR)
(72) Inventor: LEE, Sung Keu, Gyeonggi-do 451-731 (KR)
(74) Representative: Cabinet Plasseraud
(86) International application number: PCT/KR2009/004224
(87) International publication number: WO 2010/013945

(57) **Abstract**

The present invention relates to device and method for controlling a wireless image display device, in which a communication state between wireless transmitter/receiver is informed to a user and a transmission side Tx antenna and a reception side Rx antenna are controlled for providing an optimum transmission/ reception radio.

## Description

### [TECHNICAL FIELD]

The present invention relates to wireless image display devices, and, more particularly, to device and method for controlling a wireless image display device, in which a transmission side Tx antenna and a reception side Rx antenna are controlled for providing an optimum transmission/reception radio.

### [BACKGROUND ART]

In general, a TV set is a device that enables a user to watch a broadcasting program by means of a broadcasting signal carrying the broadcasting program.

Currently, networking of an office or the like is undergoing by construction of LAN or the like. In this situation, change of a layout of the office or change of devices connected to the network causes difficulty in connecting a plurality of cables, again.

Particularly, portable devices, such as notebook PCs, digital cameras, MP3 players and so on are flooding in the market, and consequently, necessities for communication between the portable devices have increased, to require the devices to be wireless very much.

Making data communication between the devices to be wireless is progressed actively, of which representing one is the IrDA (Infrared Data Association) standard committee for making wireless communication by using infrared rays. Though the IrDA, using the infrared ray used at the time of reception, is easy to realize, the IrDA has limitations in a transmission rate and distance.

In this situation, there have been keen requirements for wireless connection of signals for the TV set of a PDP (Plasma Display Panel), or an LCD (Liquid Crystal Display Device) which is becoming flatter, thinner, and larger.

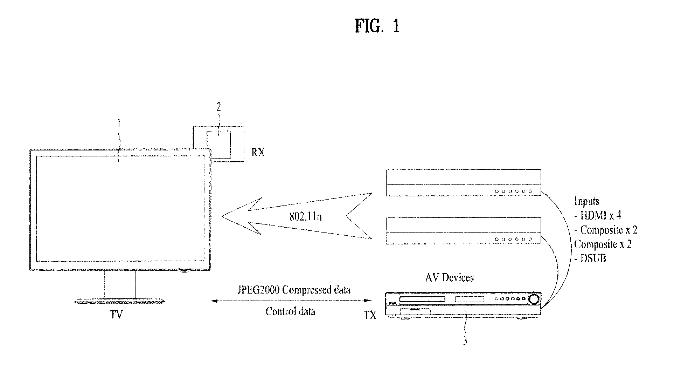

Referring to FIG. 1, a wireless image display device of above requirement enables the user to watch a video signal received at a transmitter box (hereafter Tx) 3 and wirelessly transmitted to a receiver box through an external AV device on a large sized TV set 1 having the receiver box (hereafter Rx) 2 built-therein or mounted to an outside thereof at anywhere in a house.

The transmitter side Tx and the receiver side Rx of the TV set that are the wireless image display devices have antennae for wireless communication.

### [DISCLOSURE OF INVENTION]

### [TECHNICAL PROBLEM]

However, in a case transmission/reception states are not smooth at the time of wireless communication due to movement of the reception side Rx, the user becomes inconvenient for re-setting an antenna position according to the communication state.

### [TECHNICAL SOLUTION]

To achieve these objects and other advantages and in accordance with the purpose of the invention, as embodied and broadly described herein, a device for controlling a wireless image display device includes a receiver for receiving a data from a wireless transmitter which provides an image signal through an antenna, a transmission/reception ratio determining unit for determining a transmission/ reception ratio of the received data, a memory for storing a preset reference value which meets the transmission/reception ratio and a control unit for comparing the transmission/ reception ratio of the received data to the preset reference value and adjusting the antenna according to a result of the comparison.

The preset value of the transmission/reception ratio is set by a user as the user desires, or set in a default.

The device further includes a user interface unit for providing the control value for adjustment of the antenna if the antenna is in a manual adjustment mode.

The control unit sets one of antenna adjustment automatic or manual modes.

The control unit, if the determined transmission/reception ratio is below the preset reference value as the result of the comparison, adjusts up/down and left/right direction moving position values and a rotation angle value of the antenna.

The memory stores a adjusted up/down and left/right direction moving position values and a rotation angle value of the antenna and a data transmission/reception ratio transmitted through the antenna adjusted.

The stored up/down and left/right direction moving position values and the rotation angle value of the antenna corresponding to the data transmission/reception ratio in the memory are reference to adjustment of antenna.

The device further includes a display unit for displaying a transmission/reception ratio or antenna position and direction changed by the antenna adjustment with an OSD data.

The displayed position information of antenna is image or numerical value.

The control unit, if the user desires to re-adjust the antenna, re-adjusts the antenna, stores the transmission/reception ratio of a data obtained by the re-adjustment, compares the transmission/reception ratio obtained according to the re-adjustment of the antenna to the transmission/reception ratio in storage, and makes the wireless data communication to be performed in a state of the antenna having a high transmission/reception ratio.

The control unit controls a motor mounted to a lower end of the antenna according to the control value for moving an antenna shaft up/down.

In another aspect of the present invention, a method for controlling a wireless image display device includes the steps of wirelessly receiving a data transmitted from a transmitter which provides an image signal, determining a transmission/reception ratio of the data received, comparing the transmission/reception ratio of the data to a preset reference value, and adjusting the antenna according to a result of the comparison.

The preset reference value of the transmission/ reception ratio is set by a user as the user desires, or set in a default.

The step of antenna adjusting includes antenna adjustment automatic or manual modes.

If the determined transmission/reception ratio is below the preset reference value as the result of the comparison, adjusts up/down and left/right direction moving position values and a rotation angle value of the antenna.

The adjusted up/down and left/right direction moving position values and the rotation angle value of the antenna and a data transmission/reception ratio transmitted through the antenna adjusted are stored.

The stored up/down and left/right direction moving position values and the rotation angle value of the antenna corresponding to the data transmission/reception ratio are reference to adjustment of antenna.

The method further includes the steps of displaying a transmission/reception ratio or antenna position and direction changed by the antenna adjustment with an OSD data.

The displayed position information of antenna is image or numerical value.

The method further includes the steps of, if the transmission/reception ratio meets the preset reference value, determining whether the user desires to re-adjust the antenna or not, if the user desires to re-adjust the antenna, re-adjusting the antenna, and storing the transmission/reception ratio of a data obtained by the re-adjustment, comparing the transmission/reception ratio obtained according to the re-adjustment of the antenna to the transmission/reception ratio in storage, and adjusting the antenna to a state of having a higher transmission/reception ratio according to a result of the comparison.

If the transmission/reception ratio is below the preset reference value as a result of the comparison, not only the antenna at the receiver, but also the antenna at the transmitter, can be adjusted by means of wireless communication.

It is to be understood that both the foregoing general description and the following detailed description of the present invention are exemplary and explanatory and are intended to provide further explanation of the invention as claimed.

### [ADVANTAGEOUS EFFECTS]

The present invention has following advantageous effects.

According to the present invention, if the data transmission/reception ratio of transmission/reception sides of wireless communication fails to meet a set value in storage which is not a stable state, the present invention adjusts the antenna and determines a transmission/reception ratio according to the adjustment, detects an antenna state which can meets a set value to make wireless communication at the present state for improving a wireless communication environment.

### [BRIEF DESCRIPTION OF THE DRAWINGS]

The accompanying drawings, which are included to provide further understanding of the disclosure and are incorporated in and constitute a part of this application, illustrate embodiments of the disclosure and together with the description serve to explain the principle of the disclosure. In the drawings:
FIG. 1 illustrates a conceptual diagram of a general wireless image display device.
FIG. 2 illustrates a block diagram of a device for controlling a wireless image display device in accordance with a preferred embodiment of the present invention.
FIG. 3 illustrates a flow chart showing the steps of a method for controlling an antenna for a wireless image display device in accordance with a preferred embodiment of the present invention.
FIGS. 4a to 4c illustrate exemplary diagrams of control states of an antenna for a wireless image display device in accordance with a preferred embodiment of the present invention.
FIG. 5 illustrates a flow chart showing the steps of a method for controlling a wireless image display device in accordance with a preferred embodiment of the present invention.
FIG. 6 illustrates an exemplary diagram of a control state of an antenna for a wireless image display device in accordance with a preferred embodiment of the present invention.

### [BEST MODE]

Reference will now be made in detail to the specific embodiments of the present invention, examples of which are illustrated in the accompanying drawings. Wherever possible, the same reference numbers will be used throughout the drawings to refer to the same or like parts.

The terms and words used in the specification and claims of the present invention should not be interpreted limited to a general meaning or a meaning only in a dictionary, but should be interpreted as a meaning and a concept meeting a technical aspect of the present invention in light of a principle that the inventor can define a concept of a term appropriately for describing the inventor's invention by the best way.

Therefore, because the embodiments described in the specification and the elements shown in the drawings are no more than preferred embodiments of the present invention, but do not represent all of the technical aspects of the present invention, it is required to understand that there can be a variety of equivalents and variations that can substitute them at a time of application of the present invention.

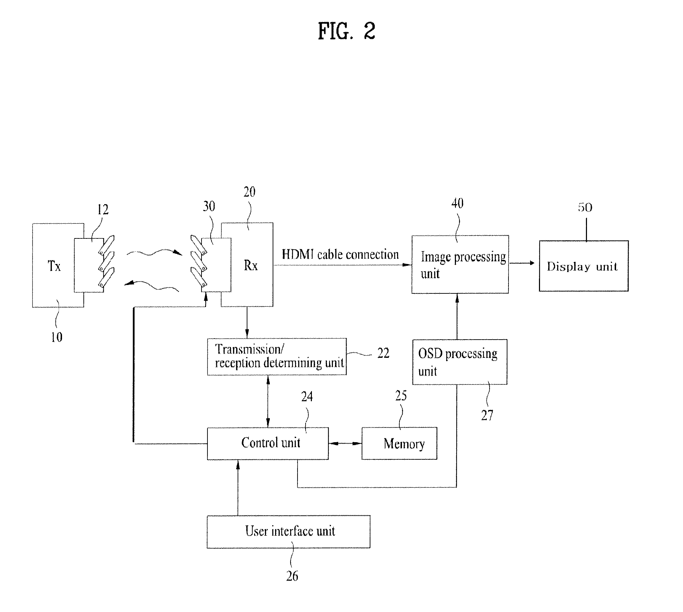

FIG. 2 illustrates a block diagram of a device for controlling a wireless image display device in accordance with a preferred embodiment of the present invention.

Referring to FIG. 2, a device for controlling an antenna for the wireless image display device includes a wireless transmitter 10 for providing an image signal, a wireless transmitter side antenna 12 mounted to the wireless transmitter 10, a wireless receiver 20 for receiving a data from the wireless transmitter 10, a wireless receiver side antenna 30 mounted to the wireless receiver 20, a transmission/reception ratio determining unit 22 for determining a data transmission/reception ratio between the transmitter/receiver, a memory 25 for storing a value of the transmission/reception ratio obtained by the transmission/reception ratio determining unit 22, an antenna control value for the value of the transmission/reception ratio, and a setting value which meets the transmission/reception ratio, a control unit 24 for, if the transmission/reception ratio is below the setting value, adjusting the antenna according to an antenna setting function, storing a control value of the adjustment, re-determining the transmission/reception ratio of a data transmitted through the antenna adjusted according to the control value thus, and, if the transmission/reception ratio re-determined thus meets the set value, maintaining the present state of the antenna for performing wireless data communication, a user interface unit 26 for providing an input signal for manual adjustment of the antenna, an OSD processing unit 27 for providing information on data transmission/reception ratio and antenna position and direction changed by the antenna adjustment in OSD data, an image processing unit 40 for processing the received data from the wireless receiver 20 to display image data, and a display unit 50 for displaying an image signal received thus and the transmission/reception ratio of the image signal. The display unit 50 displays a transmission/reception ratio or antenna position and direction changed by the antenna adjustment with an OSD data.

The device for controlling an antenna for the wireless image display device may be mounted to an inside of the wireless image display device or may be mounted to an outside of the wireless image display device and controlled, separately.

The control unit 24 generally controls the wireless image display device, and particularly, compares the value of the transmission/reception ratio determined by the transmission/reception ratio determining unit 22 to the setting value that is a value meeting the transmission/ reception ratio stored in the memory 25, and, if the value of the transmission/reception ratio determined by the transmission/reception ratio determining unit 22 is determined to be below the setting value, adjusts the antenna according to the antenna setting function.

In this instance, the setting value of the transmission/reception ratio stored at the memory 25 may be set by the user as the user desires, or set as a default at the time of production.

The control unit 24 determines whether an antenna adjustment function setting is automatic or manual, and, if set in manual, provides information on the transmission/reception ratio determined by the transmission/reception ratio determining unit 22 to a screen for the user to make the antenna adjustment.

Opposite to this, if set in automatic, the control unit 24 moves the antenna up/down according to antenna adjustment information provided in a table at the memory 25, and turns a plurality of antenna pins to a same predetermined angle.

Then, the data transmission/reception ratio received from the wireless transmitter through the antenna adjusted according to a control value by the up/down movement of the antenna and the turn of the pins of the antenna is re-determined. If the transmission/reception ratio re-determined thus meets the setting value, the present state of the antenna is kept for making wireless data communication securely.

Moreover, if the transmission/reception ratio re-determined thus meets the setting value, the control unit 24 stores the control value and information on the transmission/reception ratio of the data transmitted through the antenna adjusted thus according to the control value to the memory 25, and displays the control value and the information on the transmission/reception ratio on the screen.

And, even if the transmission/reception ratio re-determined thus meets the setting value, the control unit 24 determines whether the user desires to re-adjust the antenna or not, and if the user requests the re-adjustment, the control unit 24 re-adjusts the antenna until the user satisfies.

The user interface unit 26 a key signal from the user to the control unit 24 in a case the antenna adjustment function setting is set to manual.

The control unit 24 adjusts the antenna by moving up/down and rotating the antenna with reference to the information on adjustment of the antenna on the table at the memory 25 according to the key signal received through the user interface unit 26.

If the wireless transmission/reception ratio is below the set value, the control unit 24 can control, not only the antenna 30 at the receiver 20, but also the antenna at the transmitter 10 by means of wireless communication, to be the same control value.

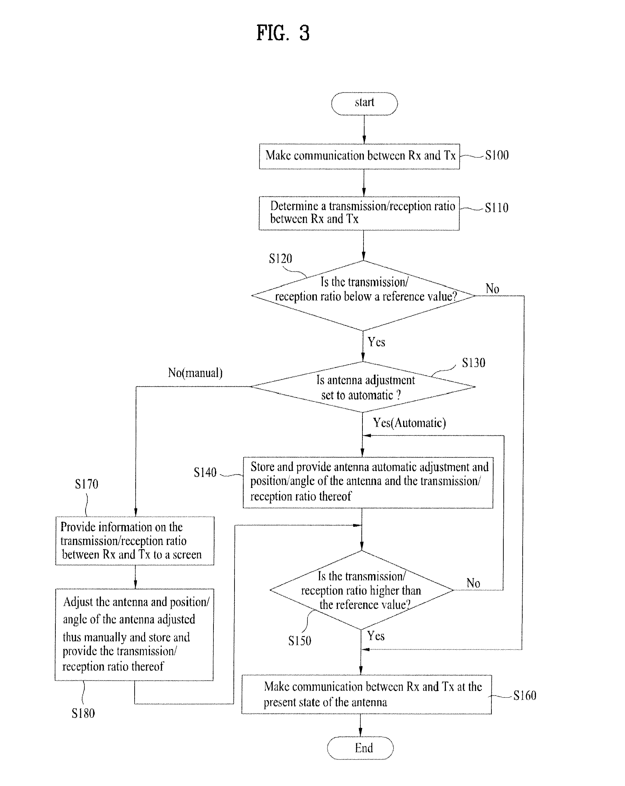

A process for controlling antennae respectively mounted to the wireless transmitter and the wireless receiver of the wireless image display device will be described with reference to FIGS. 3 to 5.

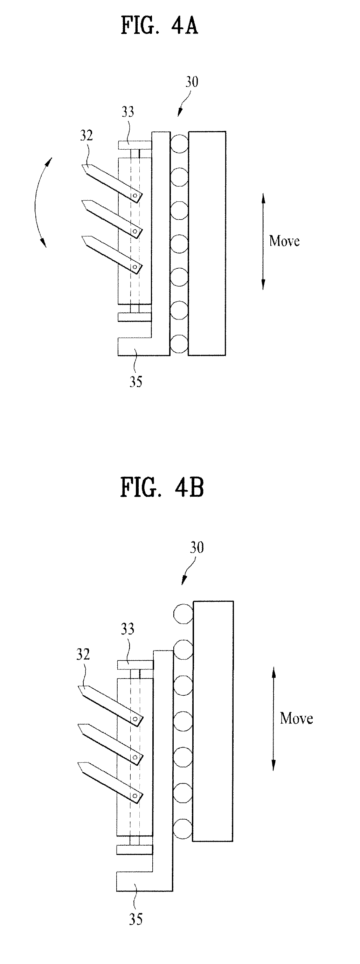

FIG. 3 illustrates a flow chart showing the steps of a method for controlling a wireless image display device in accordance with a preferred embodiment of the present invention, and FIGS. 4a to 4c illustrate exemplary diagrams of control states of an antenna for a wireless image display device in accordance with a preferred embodiment of the present invention.

Adjustment states of the antenna shown in FIGS. 4a to 4c will be described while describing a process for controlling the antennae with reference to FIG. 3.

The user makes wireless communication with the transmitter 10 which provides an image signal to receive a data from the transmitter 10 (S100).

Then, the transmission/reception ratio determining unit 22 detects transmission/reception of the wireless transmitter 10 and the wireless receiver 20, and provides it to the control unit 24.

Then, the control unit 24 determines the transmission/reception ratio of the data from the transmission/reception ratio determining unit 22 (5110), and compares to the transmission/reception ratio set value stored in the memory 25.

The transmission/reception ratio set value stored in the memory 25 may be set by the user as a set value that meets a communication state with the wireless transmitter 10, or in default at the time of production. The set value is converted into a form that the user can recognize and displayed in percent or a level.

As a result of the comparison, if the transmission/reception ratio of the wireless transmitter 10 and the wireless receiver 20 is below the set value (S120) at the present time, the control unit 24 determines whether the adjustment function for the antenna 30 mounted to the transmitter/ receiver 10 and 20 is set to automatic or manual (5130) .

As a result of the determination, if the adjustment function for the antenna 30 is set to automatic, the control unit 24 moves up/down or rotates the antenna 30, automatically as shown in FIG. 4a.

That is, referring to FIG. 4b, the control unit 24 controls a motor 35 at a lower end of the antenna 30 to move the entire antenna 30 up/down at fixed spaces.

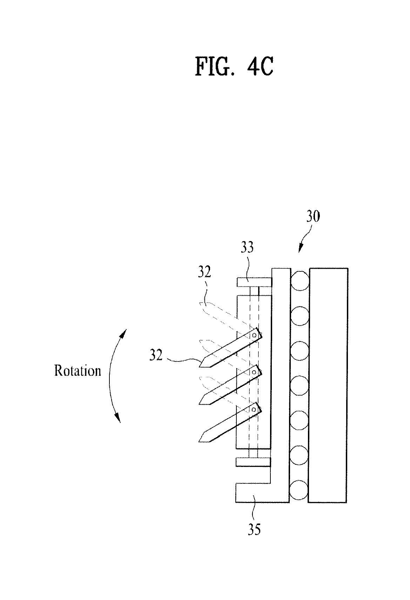

Referring to FIG. 4c, together with or separate from the up/down movement of the antenna 30, the control unit 24 controls the antenna 30 such that the antenna pins 32 at the antenna 30 rotate at a predetermined angle.

In this instance, the up/down movement of the antenna 30 at fixed spaces and the rotation of the antenna pins 32 at the predetermined angle is made by controlling the antenna 30 with reference to the table of the control values at the memory 25.

Then, the control unit 24 determines the transmission/reception ratio at the position and angle of the antenna 30 adjusted thus automatically, provides it to a screen, and stores it to the memory 15 matching the antenna 30 control values with the transmission/reception ratio (sol40).

Thereafter, the control unit 24 re-determines whether the transmission/reception ratio of the data transmitted through the antenna 30 adjusted thus according to the control value is higher than the set value (S150), and, if the transmission/reception ratio re-determined thus meets the set value, the present state of the antenna 30 is kept to perform the wireless data communication (S160).

Opposite to this, if the transmission/reception ratio re-determined thus is below the set value, failing to meet the set value, the control unit 24 returns the process to S130 to change the control value of the antenna 30 and re-adjust the antenna 30.

On the other than, if the antenna adjustment function is set to manual in S130, the control unit 24 displays information on the data transmission/reception ratio of present communication between the transmitter 10 and the receiver 20 on a screen (S170).

Then, the control unit 24 moves up/down or rotates the antenna 30 in response to the key signal from the user interface unit 26, automatically.

In this instance, the control unit 24 controls the motor 35 at the lower end of the antenna 30 to move the entire antenna 30 up/down at fixed spaces, wherein as described before, together with or separate from the up/down movement of the antenna 30, the control unit 24 controls the antenna 30 such that the antenna pins 32 at the antenna 30 rotate at a predetermined angle in response to the key signal received at the control unit 24.

The antenna pins 32 are also rotate at the predetermined angle under the control of the motor 33 which provides rotation power to the antenna pins 32.

In this instance, the up/down movement of the antenna 30 at fixed spaces and the rotation of the antenna pins 32 at the predetermined angle is made by controlling the antenna 30 with reference to the table of the control values at the memory 25.

Then, the control unit 24 determines the transmission/reception ratio at the position and angle of the antenna 30 adjusted thus manually, provides it to a screen, and stores it to the memory 15 matching the antenna 30 control values with the transmission/reception ratio (S180).

Thereafter, the control unit 24 re-determines whether the transmission/reception ratio of the data transmitted through the antenna 30 adjusted thus is higher than the set value (S150), and, if the transmission/reception ratio re-determined thus meets the set value, the present state of the antenna 30 is kept to perform the wireless data communication (S160).

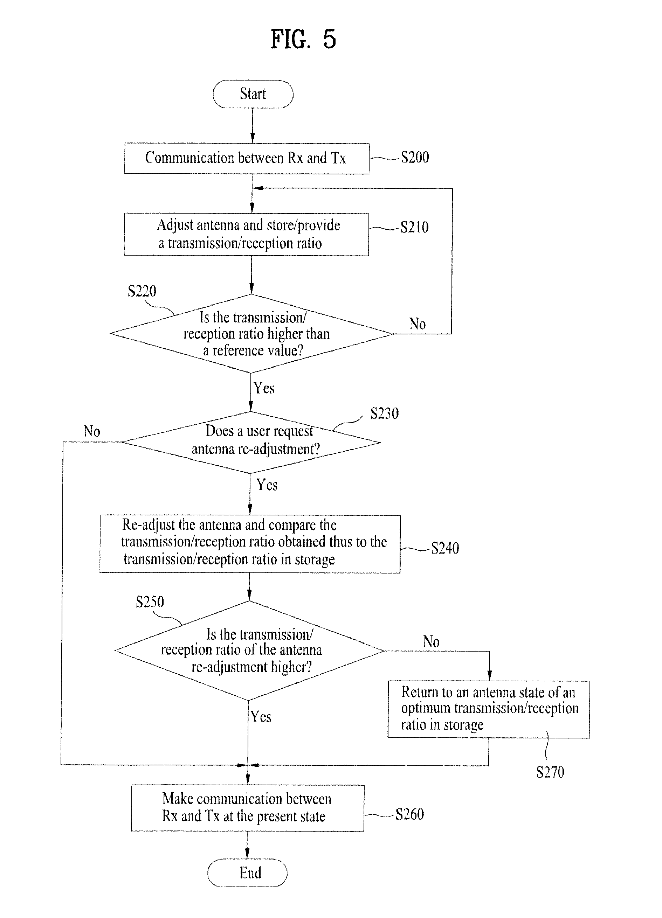

FIG. 5 illustrates a flow chart showing the steps of a method for controlling a wireless image display device in accordance with a preferred embodiment of the present invention.

The control method illustrated in FIG. 5 relates to a control method which enables re-adjustment of the antenna according to a user's request regardless of a number of times the adjustment even if the data transmission/reception ratio of the wireless image display device meets the set value.

Referring to FIG. 5, wireless communication is made to a transmitter 10 which provides an image signal to receive a data from the transmitter 10.

Then, the transmission/reception ratio determining unit 22 detects transmission/reception between the wireless transmitter 10 and the wireless receiver 20 and provides the transmission/reception detected thus to a control unit 24.

Then, the control unit 24 determines the data transmission/reception ratio from the transmission/reception ratio determining unit 22 (S200), and compares the data transmission/reception ratio determined thus to a set value of the transmission/reception ratio stored in a memory 25.

The transmission/reception ratio set value stored in the memory 25 may be set by the user as a set value that meets a communication state with the wireless transmitter 10, or in default at the time of production. The set value is converted into a form the user can recognize and displayed in percent or a level.

As a result of the comparison, if the transmission/reception ratio of the wireless transmitter 10 and the wireless receiver 20 is below the set value at the present time, the control unit 24 adjusts the transmission/reception ratio by moving the antenna 30 up/down or rotating the antenna 30.

And, an antenna 30 control value is stored to the memory 25 matching the antenna 30 control value to the transmission/reception ratio, and displays it on a screen (s210).

In this instance, if the data transmission/ reception ratio after the re-adjustment of the antenna 30 is higher than the set value (S220), i.e., meets the set value, the control unit 24 determines whether the user desires to re-adjust the antenna 30 or not (S320).

Then, if the user's request for re-adjustment of the antenna 30 is received, the control unit 24 re-adjusts the antenna 30 by moving the antenna 30 up/down and rotating the antenna pins 32 according to a control value of the antenna 30 on a table in the memory 25.

Thereafter, the control unit 24 determines the transmission/reception ratio of the data transmitted/received through the antenna 30 re-adjusted thus, and compares the transmission/reception ratio obtained thus to the transmission/reception ratio of the data in storage (5240).

As a result of the comparison, if the transmission/reception ratio of the data after the re-adjustment of the antenna 30 is higher than the transmission/reception ratio of the data in storage (S250), the control unit 24 controls to make wireless communication of the transmitter/receiver 10 and 20 at the present state of the antenna 30 (S260).

In this instance too, the user can request the re-adjustment of the antenna 30, and the control unit 24 stores the transmission/reception ratio obtained before by the user's request for the antenna 30 re-adjustment and the antenna control value according to the transmission/reception ratio to the memory 25 matching the antenna 30 control value with the transmission/reception ratio. Of course, the transmission/reception ratio stored in the memory 25 meets the set value.

Opposite to this, if the transmission/reception ratio of the data after the re-adjustment of the antenna 30 is lower than the transmission/reception ratio of the data in storage in the step of S250, the control unit 24 determines the transmission/reception ratio of the data in storage is an optimum transmission/reception ratio, detects the antenna 30 control value corresponding to the optimum the transmission/reception ratio and returns an antenna state (S270).

In this instance too, the user can request the re-adjustment of the antenna 30, and the control unit 24 re-adjusts the antenna 30 according to the user's request, to make the wireless communication in an antenna state having a high transmission/reception ratio.

That is, even if the set value of the data transmission/reception ratio is met, the control unit 24 re-adjusts the antenna 30 whenever the user requests the re-adjustment regardless of a number of times of the request.

Moreover, if the transmission/reception ratio of the data is lower the set value, the control unit 24 can control, not only the antenna at the receiver 20, but also the antenna 12 at the transmitter 10 by means of wireless communication.

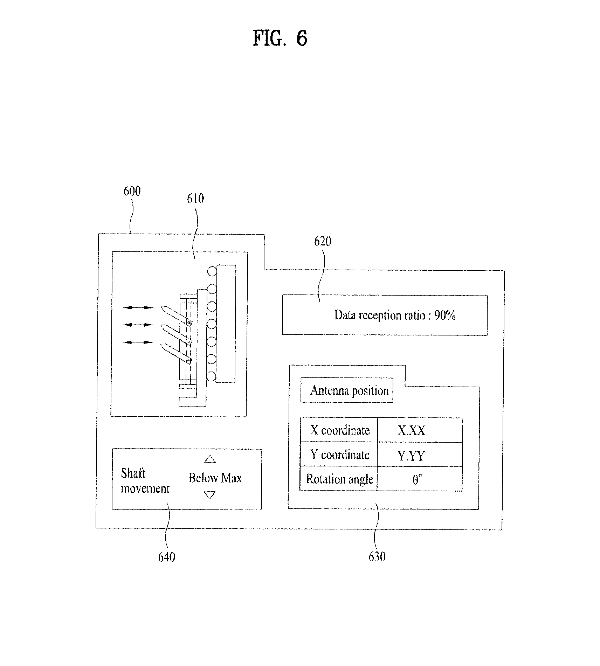

FIG. 6 illustrates an exemplary diagram of a control state of an antenna for a wireless image display device in accordance with a preferred embodiment of the present invention, shown in a menu screen.

The menu screen 600 retrieved by request of the user provides information on an image 610 showing a state of the antenna 30 moved according to antenna control of the wireless image display device, a data reception ratio 620, coordinates 630 showing a moved path by the antenna control, and a moved state 640 of an antenna axis for showing the present wireless data communication environment in numeral and visual information.

### [Industrial Applicability]

As apparent from the above description, according to wireless image display devices, and, more particularly, to device and method for controlling a wireless image display device of the present invention, a transmission side Tx antenna and a reception side Rx antenna are controlled for providing an optimum transmission/ reception radio.

As a result, if the data transmission/reception ratio of transmission/reception sides of wireless communication fails to meet a set value in storage which is not a stable state, the present invention adjusts the antenna and determines a transmission/reception ratio according to the adjustment, detects an antenna state which can meets a set value to make wireless communication at the present state for improving a wireless communication environment.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A method for controlling a wireless image display device comprising the steps of:
wirelessly receiving a data transmitted from a transmitter which provides an image signal;
determining a transmission/reception ratio of the data received;
comparing the transmission/reception ratio of the data to a preset reference value; and
adjusting the antenna according to a result of the comparison.

2. The method as claimed in claim 1, wherein the preset reference value of the transmission/reception ratio is set by a user as the user desires, or set in a default.

3. The method as claimed in claim 1, wherein the step of antenna adjusting includes antenna adjustment automatic or manual modes.

4. The method as claimed in claim 1, wherein, if the determined transmission/reception ratio is below the preset reference value as the result of the comparison, adjusts up/down and left/right direction moving position values and a rotation angle value of the antenna.

5. The method as claimed in claim 4, wherein the adjusted up/down and left/right direction moving position values and the rotation angle value of the antenna and a data transmission/reception ratio transmitted through the antenna adjusted are stored.

6. The method as claimed in claim 5, wherein the stored up/down and left/right direction moving position values and the rotation angle value of the antenna corresponding to the data transmission/reception ratio are reference to adjustment of antenna.

7. The method as claimed in claim 1, further comprising the steps of displaying a transmission/reception ratio or antenna position and direction changed by the antenna adjustment with an OSD data.

8. The method as claimed in claim 1, if the transmission/reception ratio is high the preset reference value, determining whether the user desires to re-adjust the antenna or not;
if the user desires to re-adjust the antenna, re-adjusting the antenna, and storing the transmission/reception ratio of a data obtained by the re-adjustment;
comparing the transmission/reception ratio obtained according to the re-adjustment of the antenna to the transmission/reception ratio in storage; and
adjusting the antenna to a state of having a higher transmission/reception ratio according to a result of the comparison.

9. The method as claimed in claim 7, wherein the displayed position information of antenna is image or numerical value.

10. The method as claimed in claim 1, wherein, if the transmission/reception ratio is below the preset reference value as a result of the comparison, not only the antenna at the receiver, but also the antenna at the transmitter, can be adjusted by means of wireless communication.

11. A device for controlling a wireless image display device comprising:
a receiver for receiving a data from a wireless transmitter which provides an image signal through an antenna;
a transmission/reception ratio determining unit for determining a transmission/reception ratio of the received data;
a memory for storing a preset reference value which meets the transmission/reception ratio; and
a control unit for comparing the transmission/reception ratio of the received data to the preset reference value and adjusting the antenna according to a result of the comparison.

12. The device as claimed in claim 11, wherein the preset value of the transmission/reception ratio is set by a user as the user desires, or set in a default.

13. The device as claimed in claim 11, wherein the control unit sets one of antenna adjustment automatic or manual modes.

14. The device as claimed in claim 11, wherein, if the determined transmission/reception ratio is below the preset reference value as the result of the comparison, the control unit adjusts up/down and left/right direction moving position values and a rotation angle value of the antenna.

15. The device as claimed in claim 11, wherein the memory stores a adjusted up/down and left/right direction moving position values and a rotation angle value of the antenna and a data transmission/reception ratio transmitted through the antenna adjusted.

16. The device as claimed in claim 15, wherein the stored up/down and left/right direction moving position values and the rotation angle value of the antenna corresponding to the data transmission/reception ratio in the memory are reference to adjustment of antenna.

17. The device as claimed in claim 11, further comprising a display unit for displaying a transmission/reception ratio or antenna position and direction changed by the antenna adjustment with an OSD data.

18. The device as claimed in claim 11, wherein the control unit, if the user desires to re-adjust the antenna, re-adjusts the antenna, stores the transmission/reception ratio of a data obtained by the re-adjustment, compares the transmission/reception ratio obtained according to the re-adjustment of the antenna to the transmission/reception ratio in storage, and makes the wireless data communication to be performed in a state of the antenna having a high transmission/reception ratio.

19. The device as claimed in claim 17, wherein the displayed position information of antenna is image or numerical value.

20. The device as claimed in claim 11, wherein the control unit controls a motor mounted to a lower end of the antenna according to the control value for moving an antenna shaft up/down.
